# EUROPEAN PATENT APPLICATION

(11) **EP 2 371 667 A1**
(43) Date of publication of application: **05.10.2011**
(21) Application number: 11160878.2
(22) Date of filing: 01.04.2011
(51) Int. Cl.: B62B 1/12, B62B 1/26, B62B 5/00

(54) **Trolley with two wheels for carrying heavy loads such as plant pots**

(30) Priority: 01.04.2010 IT PD20100105
(71) Applicant: Gastaldi, Christian, 35131 Padova (IT)
(72) Inventor: Barbieri, Lucio, 35025 Cartura PD (IT)
(74) Representative: Modiano, Micaela Nadia

(57) **Abstract**

A trolley (10) with two wheels (11, 12) for carrying heavy loads, particularly for carrying potted plants, constituted by a base structure (13) with two mutually opposite coaxial wheels (11, 12) for movement on the ground, a steering bar (14) protruding from the base structure and being provided, at its upper end, with means (15) for grip on the part of an operator.

Associated with the steering bar are means (17) of lifting loads of the nursery-gardening and building type and the like.

The trolley (10) according to the invention comprises means (18) for motorizing the mutually opposite wheels (11, 12).

## Description

The present invention relates to a trolley with two wheels for carrying heavy loads, particularly for carrying potted plants.

Nowadays trolleys with two wheels are known for nursery-gardening which are constituted by an upright member, generally with a profile that is curved or angled or a combination of the two for a better leverage to lift the load, being provided at its lower end with a base structure to which two mutually opposite coaxial wheels are pivoted, each on its own hub or on a same shaft, and at its upper end with means for grip on the part of an operator, such as two opposing handles with grip.

Fixed at the lower end of the member is a grip device for a medium-to-large size pot, for example a device of the type comprising two toothed jaws, which are elastically drawn toward each other, for gripping the folded upper rim of the pot, and a lower abutment for resting the rim of the bottom of the pot.

These trolleys are typically pushed by hand by an operator who uses them every day for moving a great many heavy plants in pots, with enormous expenditure of effort, both for lifting the pot and also for pushing the trolley with the pot and the plant over a slippery and yielding surface that is typical of greenhouses and nursery-gardens, such as chippings, soil or other loose surface with holes.

Normally the use of such a trolley requires two operators, such are the inconvenience and effort in handling such a means of transport in the narrow rows of plants in pots which are typical of nursery-gardens.

The aim of the present invention is to provide a trolley with two wheels for carrying heavy loads, particularly for carrying potted plants, which requires a smaller thrust or traction force of an operator that maneuvers it, compared to known trolleys.

Within this aim, an object of the invention is to develop a trolley with two wheels, with encumbrances that are not greater than equivalent trolleys of the known type.

Another object of the invention is to provide a trolley with two wheels which can also be equipped for transporting articles that are not pots, but rather for example for transporting building materials, such as sacks, bricks and the like.

Another object of the invention is to provide a trolley that is easy to maneuver and to use in general, even for an operator who does not have specific prior training.

Another object of the invention is to provide a trolley with two wheels for carrying heavy loads, particularly for carrying potted plants, which can be produced using systems and technologies that are known per se, as well as at low cost.

This aim and these objects as well as others which will become better evident hereinafter are achieved by a trolley with two wheels, for carrying heavy loads, particularly for carrying potted plants, constituted by a base structure to which two mutually opposite coaxial wheels for movement on the ground are pivoted, a steering bar protruding from said base structure and being provided, at its upper end, with means for grip on the part of an operator, said trolley being characterized in that lifting means for loads of the nursery-gardening and building type and the like are associated with said steering bar, and in that it comprises means for motorizing said mutually opposite wheels.

Further characteristics and advantages of the invention will become better apparent from the description of a preferred, but not exclusive, embodiment of the trolley with two wheels, for carrying heavy loads, particularly for carrying potted plants, according to the invention, illustrated by way of non-limiting example in the accompanying drawings wherein:
Figure 1 is a perspective view of the trolley according to the invention;
Figure 2 is another perspective view of the trolley according to the invention;
Figure 3 is a perspective view from below of a detail of the means for motorizing the wheels;
Figures 4 and 5 are end elevation views respectively of the configuration for rest and configuration for transport of the trolley according to the invention;
Figures 6 and 7 each show a different embodiment of the trolley according to the invention.

With reference to the figures, a trolley with two wheels according to the invention is generally designated in the figures with the reference numeral 10.

The trolley 10 is thus of the type with two wheels, 11 and 12 respectively, and is constituted by a base structure 13 to which two mutually opposite coaxial wheels 11, 12 for movement on the ground are pivoted, a steering bar 14 protruding from the base structure 13 and being provided, at its upper end, with means 15 for grip on the part of an operator.

In the embodiment of the invention described herein for the purposes of non-limiting example of the invention, the steering bar 14 is constituted by an upright member which is composed of tubular portions with a rectilinear extension 14a, 14b and 14c, the first two joined consequentially so as to define an angled profile of the upright member 14, and the third portion 14c which can also be rigidly fixed or, as described below, articulated to the second tubular portion 14b by means of a pivot with an axis that is substantially parallel to the axis of rotation of the wheels 11 and 12.

The means 15 for grip on the part of an operator are constituted by a handlebars with two mutually opposite grips 16, but it is understood that they can also be of another similar and equivalent type.

Associated with the steering bar 14 are means 17, which are better described below, of lifting loads of the nursery-gardening and building type and the like.

The trolley 10 according to the invention comprises means 18 for motorizing the mutually opposite wheels 11, 12.

The motorization means 18 are constituted by an electric motor 19 enclosed in a housing 20 at the base structure 13 of the steering bar 14.

The motorization means 18 advantageously comprise a differential 21 which is interposed between the electric motor 19 and one of the wheels, for example a first wheel 11; the presence of the electric motor 24 makes it possible to optimize the maneuvering of the trolley 10 within the narrow rows of plants which are typical of nursery-gardens and greenhouses.

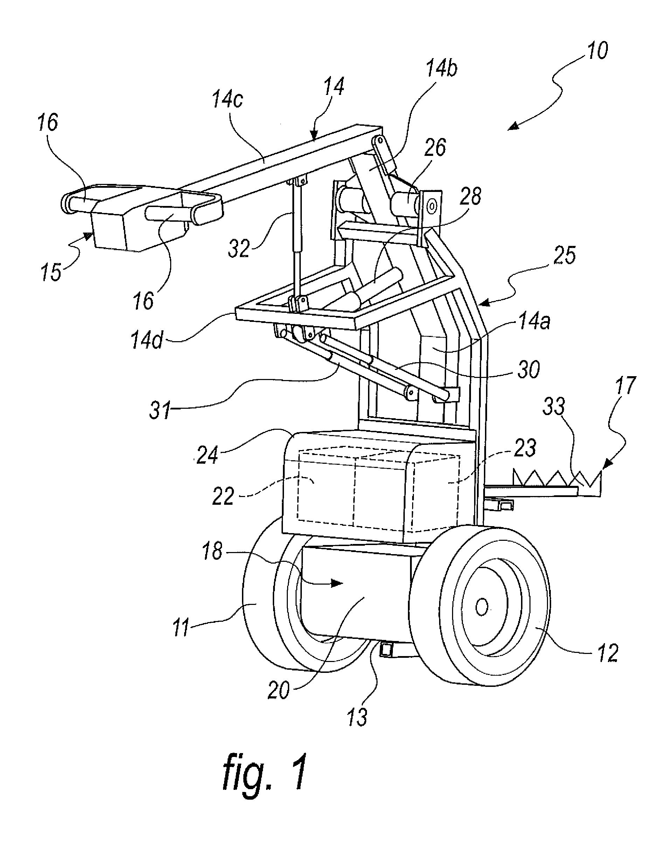

The electric motor 19 is powered by at least one battery or, for example as can be seen in Figure 1, by two batteries 22 and 23, coupled to the steering bar 14.

In the embodiment of the invention described herein for the purposes of non-limiting example of the invention, the batteries 22 and 23 are accommodated in a protective container 24, which is fixed to and carried by a supporting frame 25 which is pivoted to the steering bar 14 with a tilting axis that is parallel to the rotation axis of the wheels 11, 12.

The batteries 22 and 23, which tilt with the support frame 25 pivoted to the steering bar, form adapted counterweight load balancing means, for balancing at least partially the load carried by the trolley 10 in the configuration for movement.

The frame 25 comprises two lateral arms 25a and 25b, and a crossmember 25c, with the two upper ends of the arms pivoted by means of a through pivot to two opposite coaxial sleeves 26 which are fixed to the steering bar 14.

The counterweight balancing means also comprise a C-shaped element, designated in Figure 1 with the reference numeral 14d, which is part of the frame 25, on the central portion of which a first end of a linear actuator 28, for example electric, is pivoted, the second opposite end of the actuator 30 being pivoted to the steering bar 14.

The action of the linear actuator 28 is adapted to accompany the moving away of the frame 25 that carries the batteries 22 and 23 that act as the counterweight, in order to assume a configuration of use and of transport of a plant, as well as to accompany the moving of the frame 25 back toward the steering bar 14 when returning to a configuration of non-use or of gripping the plant as described below, and also in order to stabilize the position of the frame 25 and of the batteries 22 and 23 during the movement of the trolley 10, thus impeding the oscillation of the frame 25.

Auxiliary pusher means are interposed between the C-shaped element 14d and the first portion 14a of the steering bar, said auxiliary pusher means being designed to facilitate the movement of the batteries 22 and 23 away from the base structure 13 of the trolley 10.

The auxiliary pusher means, in the present embodiment of the invention, are constituted by a pair of symmetrical gas springs 30 and 31.

In the present embodiment, as indicated above, the third upper tubular portion 14c of the steering bar 14 is articulated to the contiguous second tubular portion 14b, being pivoted thereto, by virtue of known means such as a through pivot, along an axis which is parallel to the axis of the wheels.

A strut 32 of adjustable length is interposed between the C-shaped element 14d and the third tubular portion 14c of the steering bar 14, and is pivoted to both by a corresponding end thereof.

The adjustable length of the strut 32, for example telescopic, makes it possible to stabilize a different height of the grip means 15 according to the needs, and physique, of the operator who is handling the trolley 10 according to the invention.

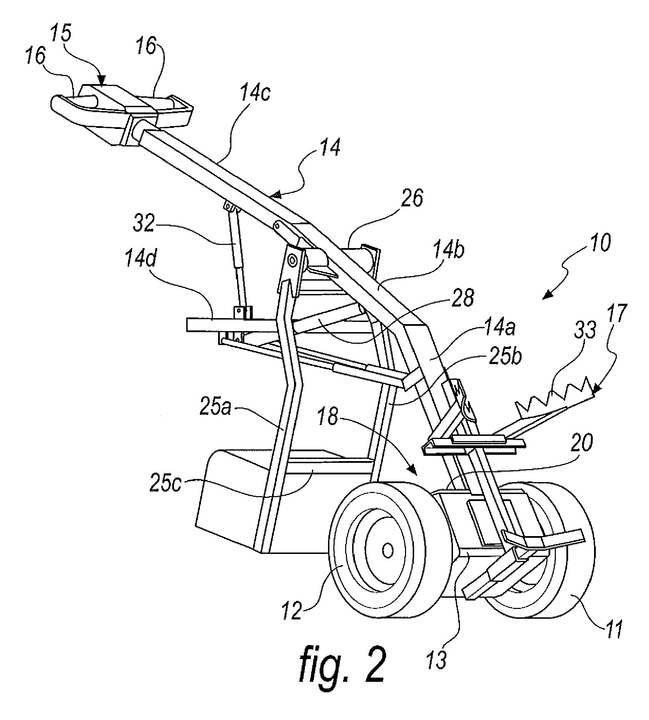

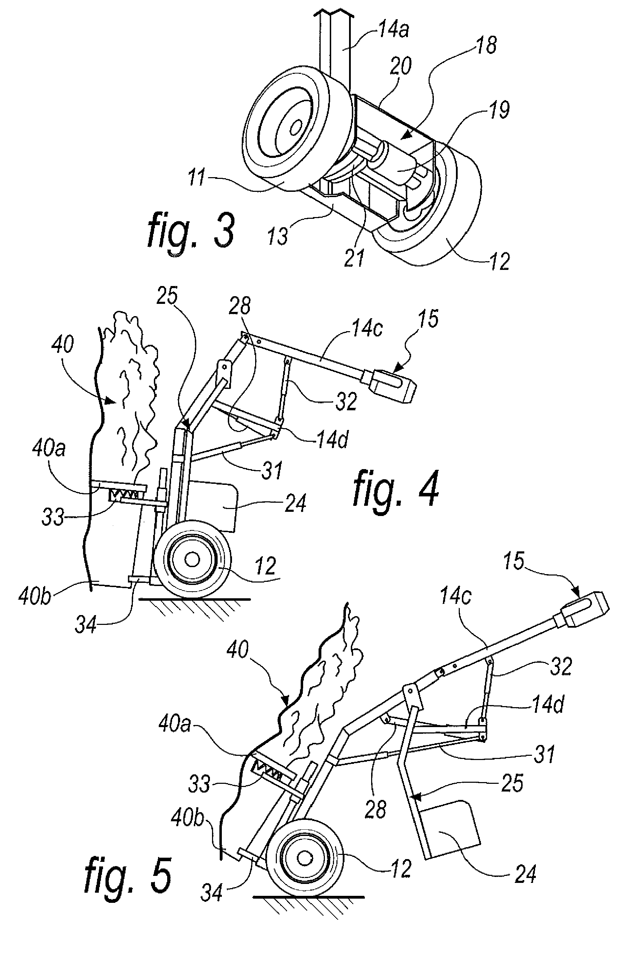

Indeed, as the trolley 10 is inclined in the configuration for use and the batteries 22 and 23 move away from the wheels 11 and 12, as can clearly be seen in Figures 2 and 5, the frame 25 rotates and the strut 32 pushes the third tubular portion 14c upward, and toward a more convenient position for grip on the part of an operator, who does not have to bend over in order to grasp the grip means 15.

As shown in Figures 4 and 5, when an operator inclines the steering bar 14 in order to then be able to push the trolley 10 loaded with the potted plant 40, the frame 25 inclines and moves away from the base structure of the steering bar 14, and the batteries 22 and 23 move away from the center of gravity of the loaded trolley 10, and with their weight they produce a torque that is designed to balance part of the load, with respect to an axis that passes through the rest points on the ground, said rest points being constituted by the regions of contact of the wheels with the ground.

The moving away of the battery container 24, which is fixed to the frame 25, is governed by the linear actuator 28 and assisted by the gas springs 30 and 31.

The repositioning of the battery container 24 in the configuration of rest or of grip, as in Figure 4, is also governed by the linear actuator 28.

The lifting means 17 for loads of the nursery-gardening type are constituted by a device of the type that comprises two toothed jaws 33, which can be divaricated elastically, for gripping the widened or folded upper rim 40a of a pot 40, and a lower abutment 34 for resting the rim of the bottom 40b of the pot.

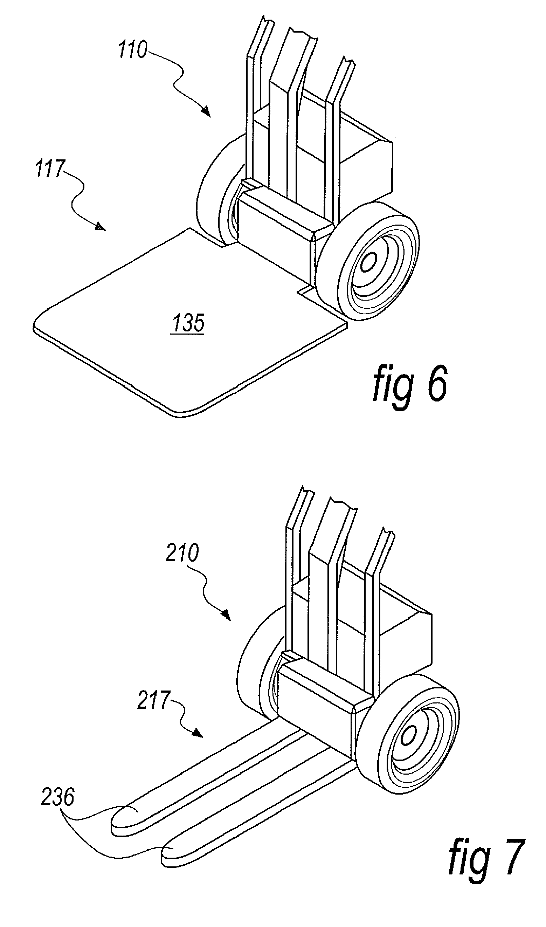

In another embodiment of the trolley according to the invention, designated in Figure 6 with the reference numeral 110, the lifting means 117 are constituted by a deck 135.

In another embodiment of the trolley according to the invention, designated in Figure 7 with the reference numeral 210, the lifting means 217 are constituted by forks 236.

In practice it has been found that the invention fully achieves the intended aim and objects.

In particular, with the invention a trolley with two wheels is provided, for carrying heavy loads, particularly for carrying potted plants, which, by virtue of the motorization means, requires a smaller thrust or traction force compared to that required by known trolleys.

Furthermore, with the invention a trolley with two wheels is provided with encumbrances that are not greater than equivalent trolleys of the known type, and thus implemented so as to be usable without any problems in the narrow rows which are typical of nursery-gardens and greenhouses.

What is more, with the invention a trolley with two wheels is provided which can also be equipped for transporting articles that are not pots, but rather for example for transporting building materials, such as sacks, bricks and the like, or for transporting pallets, by means of the adoption of suitable forks.

Furthermore, with the invention a trolley is provided which is easy to maneuver and to use in general, even for an operator who does not have specific prior training, it being necessary to have simple commands like a start and stop button 40 located on the handlebars 17, or other similar commands.

Furthermore, with the invention a trolley with two wheels is provided, for carrying heavy loads, particularly for carrying potted plants, which can be produced using systems and technologies that are known per se, as well as at low cost.

The invention thus conceived is susceptible of numerous modifications and variations, all of which are within the scope of the appended claims. In addition, all the details may be replaced by other, technically equivalent elements.

In practice the materials employed, as well as the contingent dimensions and shapes, may be any according to requirements and to the state of the art.

The disclosures in Italian Patent Application No. PD2010A000105 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A trolley (10) with two wheels (11, 12) for carrying heavy loads, particularly for carrying potted plants, constituted by a base structure (13) to which two mutually opposite coaxial wheels (11, 12) for movement on the ground are pivoted, a steering bar (14) protruding from said base structure and being provided, at its upper end, with means (15) for grip on the part of an operator, said trolley being **characterized in that** lifting means (17) for loads of the nursery-gardening and building type and the like are associated with said steering bar, and **in that** it comprises means (18) for motorizing said mutually opposite wheels (11, 12).

2. The trolley according to claim 1, **characterized in that** said motorization means (18) are constituted by an electric motor (19) enclosed in a housing (20) at the base structure (13) of the steering bar (14).

3. The trolley according to the preceding claims, **characterized in that** said motorization means (18) comprise a differential (21), which is interposed between said electric motor (19) and one of said mutually opposite wheels (11).

4. The trolley according to the preceding claims, **characterized in that** said electric motor (19) is powered by at least one battery (22) coupled to the steering bar ( 14).

5. The trolley according to the preceding claims, **characterized in that** it has means for the at least partial balancing of the load carried by the trolley in the configuration for movement.

6. The trolley according to the preceding claim, **characterized in that** said counterweight means are constituted by a supporting frame (25) for said at least one battery (22), which is pivoted to said steering bar (14) with an axis which is parallel to the axis of the mutually opposite wheels (11, 12).

7. The trolley according to the preceding claims, **characterized in that** said lifting means (17) for loads of the nursery-gardening type are provided by a device of the type that comprises two toothed jaws (33), which can be divaricated elastically, for gripping the widened or folded upper rim (40a) of a pot (40), and a lower abutment (34) for resting the rim of the bottom (40b) of the pot.

8. The trolley according to claims 1 to 6, **characterized in that** said lifting means (117) are constituted by a deck (135).

9. The trolley according to claims 1 to 6, **characterized in that** said lifting means (217) are constituted by forks (236).
